# EUROPEAN PATENT SPECIFICATION

(11) **EP 4 337 469 B1**
(45) Date of publication and mention of the grant of the patent: **18.11.2026**
(21) Application number: 21952077.2
(22) Date of filing: 29.07.2021
(51) Int. Cl.: B41J 2/175, B41F 31/02, B41L 27/04, G01G 3/12

(54) **STRAIN SENSING**
DEHNUNGSMESSUNG
DÉTECTION DE CONTRAINTE

(43) Date of publication of application: 20.03.2024
(73) Proprietor: Hewlett-Packard Development Company, L.P., Spring TX 77389 (US)
(72) Inventor: DORAN, John, 08174 Sant Cugat del Valles (ES); ALEGRE LOPEZ, Miguel Angel, 08174 Sant Cugat del Valles (ES); MCKINNEY, Richard, 08174 Sant Cugat del Valles (ES); BRAVO DE VEGA, Jose Francisco, 08174 Sant Cugat del Valles (ES)
(74) Representative: Plasseraud IP
(86) International application number: PCT/US2021/043779
(87) International publication number: WO 2023/009129

(56) References cited:
- WO-A1-2013/064418
- DE-A1- 102014 224 324
- JP-A- H09 183 237
- RU-U1- 78 926
- SU-A1- 1 809 317
- US-A- 5 731 824
- US-A- 5 731 824
- US-A1- 2007 002 086
- US-A1- 2018 281 428
- US-B2- 8 065 913
- US-B2- 8 678 567

## Description

### BACKGROUND

Inkjet printers and other apparatus that use a fluid during operation may comprise a fluid container attached to a support in the apparatus, for example removably attached to the support. The amount of fluid in such a fluid container may be monitored during operation, for example to obtain data on the fluid consumption, and/or to issue a warning when it is convenient to change the container, and/or for maintenance or other purposes. DE 10 2014 224324 discloses an example of cartridge comprising a liquid chamber in which a movable element is arranged and provided with a detecting portion and a float part.

US2007002086A1 discloses an ink level detecting apparatus usable with an ink-jet printer which includes an ink tank having a bottom, a ceiling, and a sidewall, whereby a shrinkable ink pack is accommodated in the ink tank and has a top surface that moves down evenly as an ink level in the shrinkable ink pack decreases, whereby a fixed electrode is installed to an upper portion of the ink tank, and a movable electrode disposed to face the fixed electrode at a predetermined distance from the fixed electrode. The movable electrode moves in a horizontal direction according to a height variation of the top surface of the shrinkable ink pack such that an overlap area between the movable electrode and the fixed electrode varies. Therefore, the ink level is detected from electric capacity variation sensed between the fixed electrode and the movable electrode.

### BRIEF DESCRIPTION

Some non-limiting examples of the present disclosure will be described in the following with reference to the appended drawings, in which:
Figure 1 is a schematic cross section view of an example support for a fluid container for a printing apparatus, according to implementations disclosed herein;
Figure 2 shows in schematic view an example fluid level sensor, according to implementations disclosed herein;
Figure 3a is a schematic perspective view of an example support for a fluid container for a printing apparatus, according to implementations disclosed herein;
Figure 3b is a side view of the example support of Figure 3a;
Figure 4 is a schematic perspective view from below of an example support according to implementations disclosed herein, with a fluid container attached to the support;
Figures 5, 6, 7 are block diagrams of example methods according to the present disclosure;
Figures 8a, 8b and 8c are diagrams of example sensor bridges in which example gauge strains according to the present disclosure may be connected;
Figure 9 is a very schematic block diagram of an example measuring system according to the present disclosure; and
Figure 10 is a block diagram of an example measurement circuit according to the present disclosure.

### DETAILED DESCRIPTION

Inkjet printers and other apparatus that use a fluid during operation may comprise a fluid container, for example a supply of printing fluid, a tank for waste print fluid, or other. The amount of fluid present in a fluid container and/or the amount of fluid consumed in a print job or in a servicing operation are sometimes estimated based on drop counting, e.g. recording the expected size and frequency of fluid jetted drops during printing and servicing events: however, the accuracy of this measurement method is poor. In other methods, the fluid container is removed from the printer and weighed on a standalone scale, which is time consuming and involves manual intervention; it may also cause undesired effects on the fluid supply system itself, such as intake of air, wear of some components, and other.

It is hereby proposed to estimate the amount of ink in an ink container by attaching a strain gauge to a component associated with the ink container. In the present case, ink amount accuracy is improved due to its construction design and, in particular, the position of the strain gauge within the construction design.

The present disclosure relates to determining the amount of fluid or level of fluid in a fluid container, for example a fluid container associated with a printing apparatus.

Improved estimates of the amount of fluid in a fluid container may be obtained by mounting the fluid container, e.g. in a printing apparatus, using a support according to examples of the present disclosure. Such a support for a fluid container may comprise a U-shaped bracket, i.e., a bracket with a substantially U-shaped cross section, and a strain gauge attached to a web of the U-shaped bracket.

Examples of printing apparatus which may comprise supports for fluid containers and/or may implement methods according to examples disclosed herein may be, amongst others, printers using printing fluids for thermal or piezoelectric inkjet technology, or others; 3D printers with nozzles to release fluid agents on a build material. Fluids contained in a fluid container may include latex printing fluids, solvent-based printing fluids or others, as well as fusing agents and other substances used in 3D printing, such as binding agents, detailing agents, or others.

For clarity reasons, not all the elements of the example supports and systems are illustrated in the drawings. Furthermore, the drawings are generally schematic and may not be to scale, thus not defining the precise proportions of the illustrated elements.

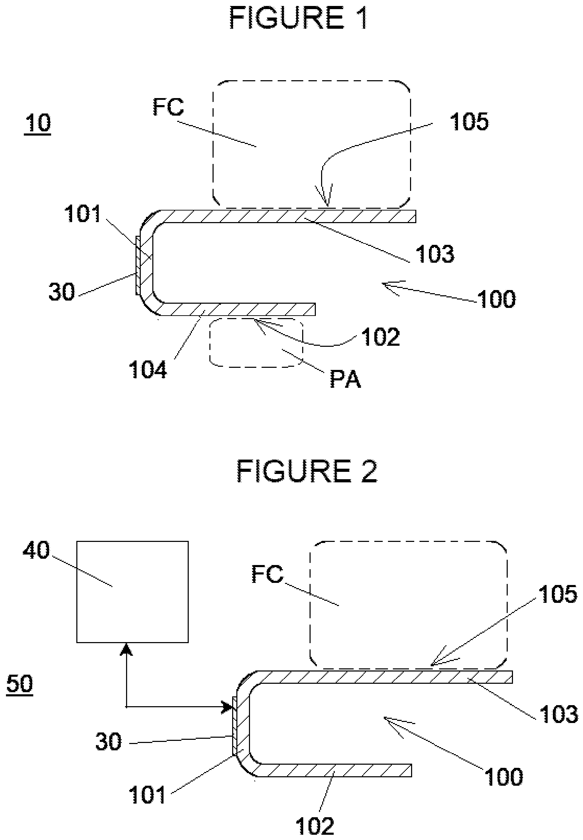

In Figure 1, a support 10 according to examples of the present disclosure may comprise a bracket 100 with a substantially U-shaped cross section, i.e., a cross section with a web 101 and two wings 102, 103, with each of the wings 102 and 103 extending from one of the ends of the web 101, and with both wings 102, 103 extending towards the same side of the web 101. The web 101 and the two wings 102, 103 have a width dimension in a width direction, substantially perpendicular to the plane of the U-shaped cross section (i.e., perpendicular to the plane of the drawing in Figure 1).

In some examples, each of web 101, wing 102 and wing 103 may have different widths in the width direction, and wings 102 and 103 may have different lengths. In some examples, one or both wings 102, 103 may be substantially perpendicular to the web 101; in other examples, one or both wings 102, 103 may form angles of between 60° and 130° with the web 101.

A mounting portion 104 may be defined on wing 102 of the bracket 100, for attaching the bracket 100 to a printing apparatus PA, e.g. to a stationary supporting frame of the printing apparatus. A bearing portion 105 may be defined on the other wing 103 of the bracket 100, for attaching, for example for removably attaching, a fluid container FC to the bracket 100. The bracket 100 may be shaped such that once it is in operating position in the printing apparatus PA, i.e., with the mounting portion 104 attached to the frame of the printing apparatus, the bearing portion 105 of the bracket is substantially horizontal.

In some examples, the wing 103 of the bracket on which the bearing portion 105 is provided is intended to extend in a substantially horizontal plane, and to be the upper wing of the bracket 100, once the support 10 is in working position in a printing apparatus.

The mounting portion 104 and the bearing portion 105 of the bracket 100 may each comprise suitable attachment features such as mounting holes or grooves, snap fit joints, guides, and/or others. Once the bracket 100 is mounted in the printing apparatus PA and the fluid container FC is attached to the bracket 100, the space between the wings 102 and 103 may remain substantially free.

In some examples of the present disclosure, a strain gauge 30 is attached to the web 101 of the bracket 100, between the mounting portion 104 and the bearing portion 105.

When the bracket 100 is attached to the frame of the printing apparatus PA, and a fluid container FC is attached to the bearing portion 105, the weight of the fluid container exerts a force on the wing 103 that tends to deform the bracket 100 and in particular the web 101. This causes a strain on the web 101, that is proportional to the force applied on the bracket, i.e., to the weight of the fluid container FC. As fluid is consumed during operation and exits the fluid container FC, the strain on the strain gauge 30 decreases, and therefore the reading of the strain gauge 30 decreases proportionally.

As a consequence of the U-shaped geometry of the bracket 100 and the positioning of the fluid container FC on the bearing portion 105 of the bracket 100, strain due to the weight of the fluid container FC concentrates on the web 101 of the bracket 100. The arrangement of a strain gauge 30 on the web 101 thus allows obtaining accurate readings of the strain on the web 101, and therefore accurate measurements of the weight of the fluid container.

In some implementations, the distance between the bearing portion 105 and the web 101 of the bracket may be greater than the distance between the mounting portion 104 and the web 101. For example, the distance between a central point of the bearing portion 105 and the web 101 may be greater than the distance between a central point of the mounting portion 104 and the web 101, with the central points being defined as the points of the bearing and mounting portions where the respective loads are centred. This may increase the torque exerted by the weight of the fluid container FC on the web, and therefore the strain to which the web 101 is subjected, so that the readings of strain gauge 30 may be increased for a given weight of the fluid container FC.

In some examples, a strain gauge 30 may be positioned substantially in the centre, in the width direction, of the web 101. Such a central position of the strain gauge 30 may be useful to reduce the influence on the strain gauge of a twisting strain to which the web 101 may be subject: the strain gauge readings may therefore be more accurately correlated to the strain caused on the web 101 by the weight of the fluid container FC.

As shown e.g. in Figure 1, in some examples the strain gauge 30 may be attached on the outer side of the web 101, i.e., on the convex side of the U-shaped bracket 100.

The strain gauge 30 may be oriented on the web 101 in such a way to be subject in particular to deformation and strain occurring in the direction perpendicular to the width direction of the web 101, i.e., the direction extending from one wing 102 to the other wing 103 in the U-shaped cross section, as strain in this direction is substantially related to the load exerted by the weight of the fluid container FC.

In some examples, more than one strain gauge 30 may be attached to the bracket 100, e.g. on the outer surface of the web 101.

In some examples, the amount of fluid or the level of fluid in the fluid container FC may be determined based on the measured weight of the fluid container, i.e., based on readings provided by the strain gauge 30.

For instance, a controller 40 may use the output of the strain gauge 30 to determine the amount of fluid in the container FC, taking into account also the weight of the empty container, and/or the weight of the full container, and/or the kind of fluid, and/or density of the fluid, and/or the temperature in the printing apparatus, and/or other parameters.

Since the determination of the amount of fluid is based on an accurate measurement of the weight of the fluid container, the amount of fluid may also be accurately determined. Furthermore, the determination of the amount of fluid in the fluid container may be performed at any time, e.g. programmed and automatically executed by the controller, without manual intervention of an operator and without involving down times.

The amount of fluid may be determined at predetermined intervals, e.g. in order to issue an alert when the amount of fluid falls below a predetermined threshold, or when the amount of fluid raises above a predetermined threshold in the case of a fluid container of a service station that received waste fluid; it may be determined before, during or after the operation of the printing apparatus, e.g. before a print job to estimate if there is enough fluid to complete a desired print job, or both before and after a print job, to obtain an estimate of the amount of fluid employed in that job.

In some examples, the amount or level of fluid in the fluid container FC may be determined in any circumstance where it is deemed useful to obtain such information, for example for print fluid management or printing fluid accounting purposes. Accurately monitoring the amount of fluid over time may also allow detecting unusual fluid consumption from the fluid container, indicating a potential leak or other issue.

Implementations of a support for a fluid container according to the disclosure may be employed e.g. for print fluid containers supplying fluid to inkjet printheads or other printing systems, and/or for fluid containers intended to receive fluid discarded for maintenance purposes, such as waste print fluid tanks, and/or for other fluid containers, e.g. intermediate fluid containers that may be used in the apparatus. In each case, the fluid container may be e.g. removably attached to the U-shaped bracket, to be replaced when depleted (or when full, in the case of a waste fluid container), or the fluid container may be permanently attached to the U-shaped bracket, e.g. to be refilled when convenient.

In some implementations, e.g. when printing fluids of different colours and/or types are employed, several example supports as disclosed herein may be provided in a printing apparatus, each provided with a U-shaped bracket and a strain gauge, and with a fluid container being attached to each support, e.g. fluid containers containing print fluids of different colours.

Strain gauge 30 is a sensing element that, under the load caused by the weight of the fluid container FC, deforms and changes its electrical resistance, in proportion to the mechanical strain of the web 101 of the bracket 100.

In some implementations, strain gauge 30 may be a foil strain gauge, comprising an insulating flexible backing which supports a conductive foil pattern, e.g. a metallic foil pattern. In some examples, the foil strain gauge may be attached to the web 101 using a suitable adhesive, such as epoxy or others.

In some examples the conductive foil pattern of strain gauge 30 may comprise a plurality of thin parallel tracks connected in series between two connection terminals. Such a strain gauge 30 may be oriented on the web 101 with the parallel tracks extending in the direction perpendicular to the width direction of the web 101, i.e., the direction extending between one wing 102 and the other wing 103 in the U-shaped cross section. The strain gauge 30 thus may sense the strain in this direction, which is caused by the weight of the fluid container FC.

In some implementations, strain gauges 30 may extend a distance beyond the web 101 e.g. towards the bearing portion 105 and/or towards the mounting portion 104, so as to be subject to strain at one or at both bends of the bracket 100.

In example supports 10 according to the present disclosure, the bracket 100 may be an integral part, e.g. formed by a bent metal sheet, such that irregularities in the properties of the bracket due e.g. to assembly of different components, may be reduced. The strain to which the web 101 is subject may therefore be more uniform: this may prevent, for instance, a high degree of twisting of the web 101 in the direction of the width.

In some examples, the web 101 and/or the wings 102, 103 of the bracket 100 may have cut outs of different shapes and sizes, e.g. for a higher concentration of the strain of the web 101 in some areas, where the strain gauges 30 may be attached.

In some examples, and as explained in more detail later on, one or more strain gauges 30 may be connected in a Wheatstone bridge configuration in order to measure the change of resistance and therefore the strain in the web 101 of the bracket 100, to which the strain gauges 30 are subject. An excitation voltage may be applied to input leads of the Wheatstone bridge and a voltage reading may be taken from output leads of the Wheatstone bridge, related to the resistance of the strain gauge 30 and therefore related to the strain of the web of the bracket and to the weight of the fluid container. For increased accuracy in the determination of the amount of fluid in the fluid container, an electronic circuit may be provided to amplify the output of the Wheatstone bridge, as explained in more detail later on.

Also, according to examples of the present disclosure, a fluid level sensor 50 may be provided, e.g. to measure the fluid level, or the fluid amount, in a fluid container. As illustrated e.g. by Figure 2, examples of a fluid level sensor 50 may comprise a bracket, e.g. such as bracket 100 of Figure 1, with a U-shaped cross section formed by two wings 102, 103 and a web 101 between them, and with one of the wing comprising a bearing portion 105 for attaching a fluid container FC. The fluid sensor 50 may also comprise a strain sensor, such as for example a strain gauge 30 as described above in relation to Figure 1, attached to the web 101 of the bracket 100 to sense a strain of the web 101 caused by the weight of a fluid container FC that may be attached to the bearing portion 105 of the bracket 100. The fluid sensor 50 may also comprise a controller 40, to correlate the strain of the web, as sensed by the strain sensor, to a fluid level in the fluid container FC.

Implementations of fluid level sensors according to the present disclosure may combine different brackets, strain gauges and controllers as described in any of the examples herein.

Examples of supports and/or examples of fluid level sensors according to the present disclosure may be applied, *inter alia,* to a printing apparatus, e.g. to an inkjet printing apparatus. For example, such supports or fluid level sensors may be used for fluid containers of a printing apparatus, such as print fluid containers for supplying print fluid for a print job, tanks for collecting waste print fluid, or others.

Example supports 10 and example fluid level sensors 50 may be mounted in a printing apparatus e.g. by attaching the bracket 100 to a stationary frame of the printer and/or to a print fluid supply station, a printhead service station, or other, with the web 101 and bearing portion 105 of the bracket 100 positioned so that the weight of a fluid container FC attached on the bearing portion 105 causes a load and consequent strain on the web 101.

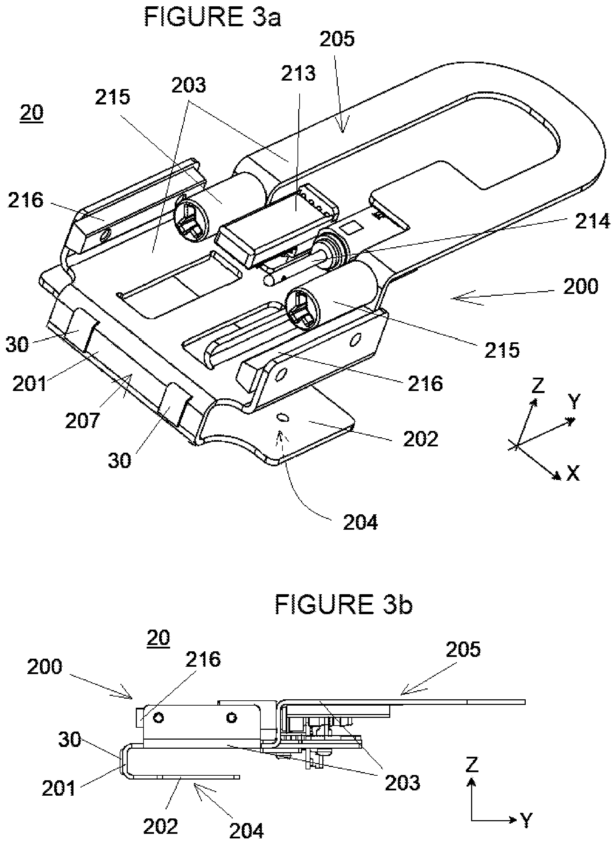

Figures 3a and 3b illustrate, in perspective view and side view respectively, an example of a support 20 for a fluid container for a printing apparatus, according to implementations of the present disclosure. Example support 20 may comprise a bracket 200 with a substantially U-shaped cross section, with a web 201 and two wings 202, 203.

Wing 202 of the bracket 200 extends from one end of the web 201 and comprises a mounting portion 204 for allowing the assembly of the bracket 200 on a support frame of a printing apparatus (not shown).

Wing 203 of the bracket 200 extends from another end of the web 201 and comprises a bearing portion 205 for attaching and supporting a fluid container (not shown in Figures 3a, 3b) on the bracket 200.

Each of the web 201 and the two wings 202, 203 have a width dimension in a width direction, i.e., the X direction in Figure 3a, substantially perpendicular to the plane YZ of the U-shaped cross section of the bracket 200.

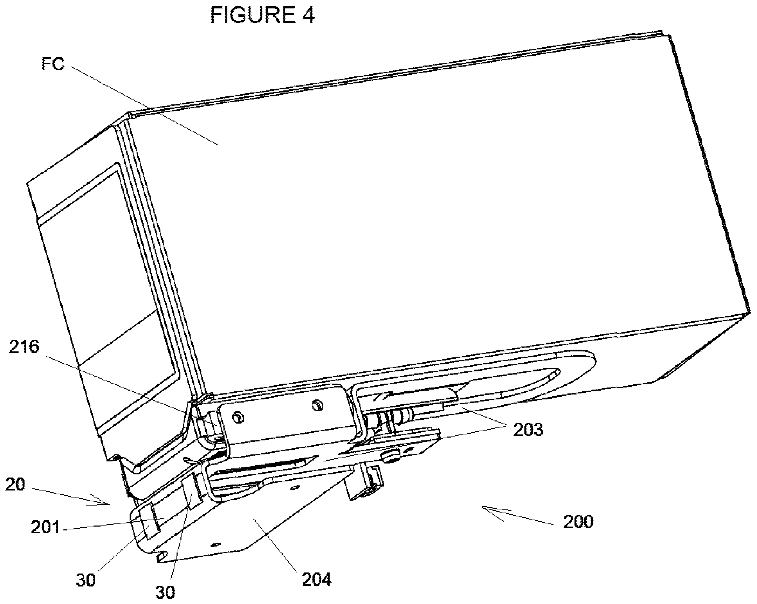

In some examples, the wings 202, 203, e.g. wing 203 in Figures 3a and 3b, may be shaped with some bent sections and/or openings and/or other details. For instance, in some examples the wing 203 may comprise or receive some other elements, which will be described below, intended to cooperate with the fluid container. Figure 4 illustrates, in a perspective view seen from below, an example support 20 with a fluid container FC attached on the bearing portion 105.

Example brackets 200, e.g. as illustrated in Figures 3a, 3b and 4, are generally U-shaped, as both wings 202, 203 extend from the web 201 in the same general direction (Y direction in Figure 3a), which may be a direction substantially perpendicular to the plane XZ of the web. In some examples, each wing 202, 203 may extend at a different angle from the web 201. Wings 202 and 203 may have the same length or different lengths in the Y direction (length direction) of Figure 3a.

In the example support 20, two strain gauges 30 are attached to the bracket 200, e.g. on an outer surface 207 of the web 201 as illustrated.

In some implementations of the present disclosure, one, two or four strain gauges 30 may be attached to the bracket 200, e.g. on the outer surface 207 of the web 201. In other examples, a different number of strain gauges 30 may be used.

In some examples in which two strain gauges are used, attached to the web of a bracket 100 or 200, each strain gauge 30 may be a foil strain gauge, oriented as described above in relation with Figure 1. In some examples, two strain gauges 30 may be parallel to each other and spaced apart along the X direction, arranged symmetrically with respect to the centre of the web in this X direction. In some examples, the distance between the two strain gauges 30 may be at least 30% of the total width of the web 201, i.e., of the dimension of the web 201 in the X direction.

In some implementations in which four strain gauges 30 are used, for instance four foil strain gauges, two of the four strain gauges may be attached to the web 101 or 201, e.g. as in a two-gauge implementation as described in the previous paragraph; for instance, they may be attached to the outer surface 207 of the web. In some examples, the two additional strain gauges 30 may also be attached to the web 101 or 201 and, in some examples, they may be attached to the inner surface of the web. For instance, they may be placed in a mirror position with respect to the two strain gauges 30 positioned on the outer surface of the web, as this mirror position may allow a better balancing of the readings.

In some implementations, in order to increase the accuracy of the determination of the amount of fluid in the container, a simulation based on Finite Element Analysis (FEA) may be carried out for a particular design of the bracket or for a particular bracket, to determine the zones of the web which undergo a relevant degree of strain caused by the weight of the fluid container. The position of strain gauges may thus be tailored such that the strain they undergo, and the measurement they provide, is closely related to the weight of the fluid container.

In some examples, a support 20 for a fluid container FC may comprise additional elements intended to cooperate with the fluid container FC, which may be provided on the wing 203 of the bracket 200, i.e., on the wing intended to be the upper wing once the support 20 is in working position in a printing apparatus.

For example, such as shown in Figures 3a, 3b and 4, an example support 20 for an example fluid container FC of print fluid to be supplied e.g. to inkjet printheads, may comprise an electrical interface 213 for the connection of connection pads (not shown) of the fluid container FC to a printing apparatus controller; a fluidic interface 214 with a needle and sealing humidor, intended to establish the fluid communication with the fluid in the fluid container through a pierceable seal (not shown) of the fluid container FC; mechanical keyed connections 215, with a geometrical shape intended to match complementary shapes (not shown) formed on the fluid container to prevent errors; and guides 216 to assist in the assembly of the fluid container FC on the bracket 200 and in the alignment of the components. Other example supports 20 may have different additional elements.

In some implementations, example brackets 100 or 200 disclosed above may be made of metal, e.g. aluminium, which may be useful in case of smaller fluid containers which exert relatively low loads on the bracket, or hardened steel, stainless steel, titanium, or others. Example brackets may also be made of non-metallic materials, e.g. plastics, or combinations of several materials.

Implementations of methods according to the present disclosure for determining the amount of fluid in a fluid container, e.g. in a printing apparatus, are described below. In some implementations, such example methods may be carried out using any example support for a fluid container disclosed herein.

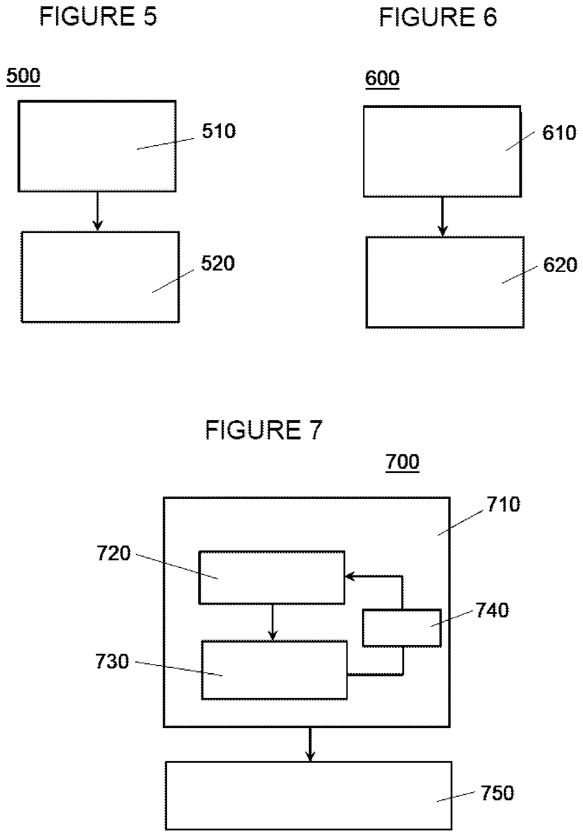

Figure 5 is a block diagram of an example method 500 for determining the amount of fluid in a fluid container FC. In some examples, the fluid container FC may be mounted on a support according to implementations disclosed herein, e.g. support 10 or support 20 of any of the above examples.

With reference to Figure 5, an example method 500 for determining the amount of fluid in a fluid container comprises, at 510, measuring with a strain gauge a strain occurring at the web of a U-shaped bracket, the U shaped bracket having a first wing for attachment to a printing apparatus and a second wing for carrying a fluid container, the strain gauge being attached to the web of the U-shaped bracket; and, at 520, determining the amount of fluid in the fluid container based on the strain measured with the strain gauge.

The first wing and second wing may be the wings extending from the two ends of the web of the U-shaped bracket, e.g. as in example supports 10 or 20 disclosed above.

According to implementations of the present disclosure, a correlation may be established between the strain in the web of the bracket, as measured with the strain gauge, and the amount of fluid in the fluid container, by virtue of the geometry of the bracket and of the positioning of the strain gauge, which, as explained above, allow concentrating and measuring the strain caused on the bracket by the weight of the fluid container, and therefore by the amount of fluid in the fluid container.

As illustrated in Figure 6, an example method 600 for determining the amount of fluid in a fluid container may comprise, at 610, measuring with a strain gauge a strain occurring at the web of a U-shaped bracket, the U shaped bracket having a first wing for attachment to a printing apparatus and a second wing for carrying a fluid container, the strain gauge being attached to the web of the U-shaped bracket; and, at 620, determining the amount of fluid in the fluid container based on the strain measured with the strain gauge and on additional parameters, e.g. parameters related to at least one of the fluid container and the fluid in the fluid container.

In some examples, additional parameters on which the determination of the amount of fluid may be based at 620 may comprise for instance a weight of the container when empty, and/or a weight of the container when full, and/or a density of the fluid in the fluid container, and/or others.

In implementations, an example method 700 for determining the amount of fluid in a fluid container in a printing apparatus may comprise, at 710, monitoring the amount of fluid in the fluid container during operation of the printing apparatus, for example when a print job is being printed, or when a printer servicing operation is being performed.

Monitoring the amount of fluid at 710 may be performed by obtaining at 720 measurements with the strain gauge of the strain at the web of the U-shaped bracket, and determining, at 730, corresponding amounts of fluid in the fluid container. Such measurements and determinations may be successively performed: e.g., at 740, a predetermined time interval may lapse, or an event may occur, between one measurement at 720 and corresponding determination at 730, and a subsequent measurement at 720 and corresponding determination at 730.

Example method 700 may also comprise, at 750, triggering an action when a determined amount of fluid is above or below a predetermined threshold. For instance, an action triggered at 750 may comprise one or more of: issuing a warning that the fluid container has a low level of fluid; issuing a warning that the fluid container is to be replaced; storing data related to the printing or servicing operation and the determined amounts of fluid in the fluid container; or other.

In implementation of methods for determining or for monitoring the amount of fluid in a fluid container from the readings of the strain gauges, a zero point may be determined, i.e., a value of the readings for which there is no fluid in the fluid container; this allows obtaining measures of absolute values of the amount of fluid in the container (e.g. instead of obtaining values of relative decreases of the amount). For example, when the fluid container is empty, the strain on the gauges is caused by the weight of the ink container itself and of the support of the fluid container. In some examples, this may be considered the zero point.

In some implementations, the zero point may be determined by a statistical study of the strain registered when the container is empty: the statistical normal of the reading for this strain may be obtained, and this value may be set as the zero point "empty".

In some implementations, the reading obtained for the total weight of a new fluid container, full of fluid, may be set as a zero point "full": decreases of the readings are registered as fluid is consumed, from 0 g down to e.g. minus 1000 g (-1000 g) for a 1 liter container; in implementations, a correction may be introduced in the calculation to take into account the specific gravity of the fluid in relation to water.

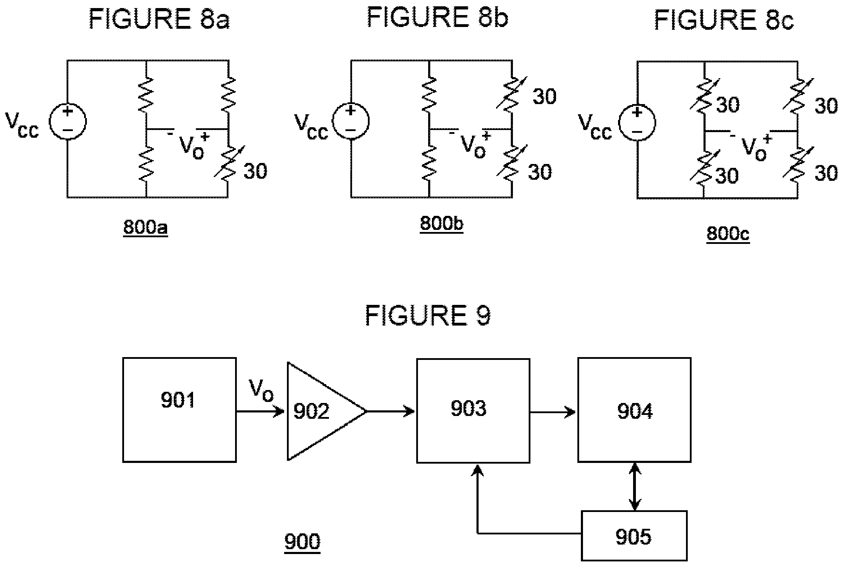

Figures 8a, 8b and 8c are diagrams of example sensor bridges 800a, 800b, 800c, according to three different example Wheatstone bridge topologies, in which gauge strains 30 may be connected to provide a measure of the strain on the web 101 or 201 of the bracket 100 or 200.

In examples, the variable resistance *R*(*ε*) of a strain gauge 30 has a behavior modelled by equation (1), where *ε* is the applied strain, GF is a Gauge Factor GF characteristic of the strain gauge, and *Rₛ* is the strain gauge nominal resistance, when *ε* = 0: $R \left(ϵ\right) = {R}_{S} + Δ R \left(ϵ\right) = {R}_{S} + GF ⋅ ϵ$ (1)

In the example of Figure 8a, one strain gauge 30 attached to the web of the bracket may be connected in a quarter-bridge topology sensor bridge 800a.

In the example of Figure 8b, two strain gauges 30 attached to the web of the bracket may be connected in a half-bridge topology sensor bridge 800b, e.g. in side by side position as shown.

In the example of Figure 8c, four strain gauges 30 attached to the web of the bracket may be connected in a full-bridge topology sensor bridge 800c.

Example sensor bridge 800b, and especially example sensor bridge 800c, may provide more resolution, and therefore more accuracy in the readings, as well as better temperature compensation, i.e., a lower variation of the readings with changes in the temperature, than example sensor bridge 800a.

For example, in sensor bridge 800c with four strain gauges, in some examples positioned two on each side of the web as described above, the four resistors of the bridge 800c are at substantially the same temperature of operation.

In each case, an excitation voltage V_{cc} may be applied to the sensor bridge 800a, 800b or 800c, for example 3.3 V or 5 V, and an output voltage *Vₒ* is obtained, e.g. in the range of millivolts, which is a function of the applied strain *ε*, i.e. the strain to which the web of the bracket is subject.

In examples, sensor bridges 800a, 800b, 800c convert the variable resistance *R*(*ε*) to an output voltage *Vₒ*(*ε*) according to equation (2), where V_{cc} is the applied excitation voltage, and *k* is a constant depending on the topology of the sensor bridge, which assuming Δ*R*(*ε*) ≪ *Rₛ* and for balanced bridge conditions, is *k* =1/4, *k* =1/2, and *k* =1 for sensor bridges 800a, 800b and 800c, respectively: ${V}_{o} \left(ϵ\right) = k ⋅ Δ R \left(ϵ\right) ⋅ Vcc = k ⋅ GF ⋅ ϵ ⋅ {V}_{cc}$ (2)

The output voltage *Vₒ* may therefore be used to determine the weight of the fluid container causing the strain, and the corresponding amount or level of fluid in the fluid container. In other words, a relationship may be established between the output voltage *Vₒ* of the sensor bridge 800a, 800b or 800c, and the amount of fluid in the fluid container.

In some implementations, the output of the sensor bridge 800a, 800b or 800c may be fed to a controller, such as controller 40 of Figure 2 (not shown in Figures 8a, 8b, 8c), to determine the amount of fluid in the fluid container, based on *Vₒ* and, in some examples, on data related to the fluid container (e.g. the weight of the fluid container when full and/or when empty), and/or the density of the fluid, and/or other parameters.

In some examples, in a support 100 for a fluid container, such as shown in Figures 1 or 2, comprising e.g. one, two or four strain gauges 30 on the web 101, e.g. attached on the outer side of the web 101, the strain gauges 30 may be connected to a sensor bridge such as 800a, 800b or 800c, and the output voltage *Vₒ*(*ε*) of the sensor bridge may be fed to controller 40. In examples, the controller 40 may determine the amount of fluid as foreseen at 520, 620 or 730 of respective example methods 500, 600 or 700 disclosed above.

While such systems and methods may provide a determination of the amount of fluid that is suitable in some cases, there may be other cases, e.g. when there are small amounts of fluid in a fluid container, in which the strain sensed by the strain gauges 30 and its variation may be small, and therefore the magnitude and variation of the output voltage *Vₒ*(*ε*) may also be small, making it difficult to determine and monitor small amounts of fluid within the fluid container with a degree of accuracy that may be convenient for some applications.

On the other hand, since the output voltage *Vₒ*(*ε*) of sensor bridges 800a, 800b or 800c is related to the amount of strain applied to the strain gauge 30, this output voltage should be zero when no strain is applied to the strain gauge 30, and equation (2) is based on this assumption. However, in practice, due to component tolerances, resistance of the various elements such as e.g. wires, as well as aging, temperature, etc., the voltage output when no strain is applied may be different from zero. This non-zero output voltage when the applied strain *ε* is zero, which may be referred to as bridge offset voltage V_{off,bridge}, may be relevant to the determination of the amount of fluid, for instance, when the amount of fluid in the fluid container is very small, as V_{off,bridge} may be of a magnitude similar to small variations of *Vₒ*(*ε*) due to variations in the amount of fluid in the fluid container.

In examples, the output voltage *Vₒ*(*ε*) of sensor bridges 800a, 800b or 800c may therefore be modelled by equation (3), which includes the offset voltage V_{off,bridge} of the sensor bridges: ${V}_{o} \left(ϵ\right) = {V}_{off , bridge} + k ⋅ GF ⋅ ϵ ⋅ Vcc$ (3)

However, V_{off,bridge} is not easily compensated at the output of the sensor bridges 8900a, 800b, 800c, because of the difficulty of generating such small voltages with common Digital to Analog Converters (DAC).

In order to provide a more accurate and reliable determination of the fluid amount, according to some implementations the output voltage *Vₒ*(*ε*) signal may be processed in an example measuring system, which may amplify the sensor bridge output voltage *Vₒ*(*ε*) and also take into account the effect of the bridge offset voltage V_{off,bridge} in the measurements.

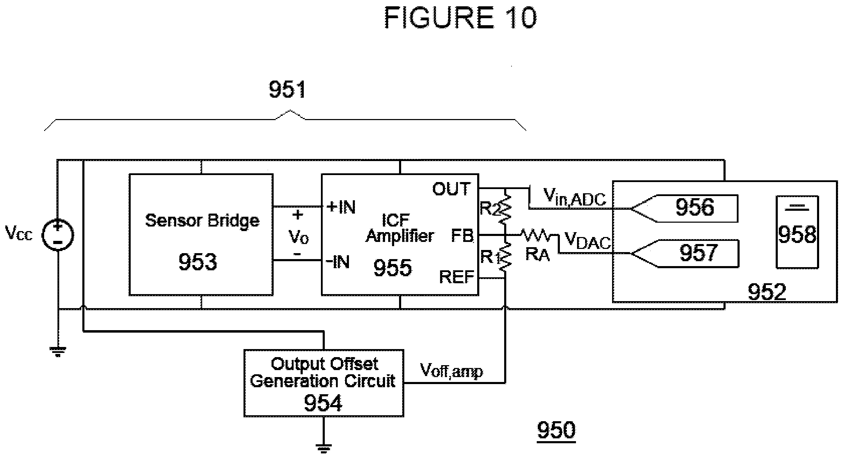

Implementations of measuring systems, which comprise an example sensor bridge such as 800a, 800b or 800c, are described in the following with reference to Figures 9 and 10. Implementations of example measuring systems disclosed in the following may be provided in combination with any of the example supports and/or example level sensors and/or example methods disclosed and claimed herein.

Figure 9 illustrates implementations of a measuring system 900 which may comprise a sensor circuit 901, such as for example one of sensor bridges 800a, 800b or 800c disclosed above, providing the output voltage *Vₒ* (*ε*) depending on the strain *ε* applied to the strain gauges 30, and including a bridge offset voltage V_{off,bridge}. The output voltage *Vₒ*(*ε*) of sensor circuit 901 may be fed to an amplifying circuit 902, which will issue an amplified signal, in which V_{off,bridge} is also amplified.

In implementations of the measuring system 900, a correction circuit 903 may apply a dynamic correction to the amplified signal before it is converted to a digital signal in an ADC (Analog to Digital Converter) 904, in order to avoid a saturation of the ADC 904.

An example numerical case is presented in the following to illustrate how saturation may occur. In such an example, the signal Vₒ may be a differential signal, e.g. ranging from -0.5 mV and +0.5 mV, and the ADC 904 input may work between e.g. 0 V and 1 V. In such case, the amplifying circuit 902 would be designed to maximize the range of the ADC input, i.e. applying an amplification offset, e.g. V_{off,amp} = +0.5 V, and subsequently amplifying the signal with a gain of e.g. 1000, thus fitting the Vₒ signal to the full resolution of the ADC. However, Vₒ in practice also includes a bridge offset voltage V_{off,bridge}: if, for example, there is a V_{off,bridge} = +0.6 mV, then Vₒ may range from +0.1 mV to +1.1 mV, so in practice the output of the amplifier may be a signal ranging from 0.1 V to 1.1 V (resulting from adding V_{off,amp} = +0.5 V and applying the gain). If such a signal is fed to the ADC, it would saturate the converter, which has a maximum input voltage of 1 V. The resulting digital signal may therefore be incorrect.

To prevent such a saturation of the ADC 904, the dynamic correction applied to the amplified signal by correction circuit 903 may take into account the range of the amplified signal, which includes the part of the signal due to the bridge offset voltage V_{off,bridge} and varies over time, in such a way that the signal inputted into the converter 904 fits a resolution of the converter 904 over time, and an accurate digitalized measurement of *V*ₒ(*ε*) may be obtained.

The bridge offset voltage V_{off,bridge} may be obtained by a closed loop calibration of the measurement system 900, performed at a time when there is no strain applied on the strain gauges 30, e.g. during a fluid container replacement operation.

As shown in Figure 9, the ADC 904 and the correction circuit 903 may be connected to a controller 905, which controls the measuring system 900, and in some implementations may also correlate the signal obtained from the measuring system 900 to the fluid level or fluid amount in the fluid container.

In some examples, the amplifying circuit 902 may comprise an Indirect Current Feedback (ICF) amplifier, which may avoid saturation of the output of the amplifying circuit 902, while maximizing the use of the resolution of the ADC 903, using the highest resolution available for the amplified signal.

Figure 10 illustrates implementations of a measuring system 950 which in some examples may comprise a Front-End analog electronic circuit 951, which converts the variable resistance *R*(*ε*) to a voltage *V*_{in,ADC} to be converted to a digital signal; and a microcontroller unit (MCU) 952.

The Front-End analog electronic circuit 951 may comprise a sensor bridge 953, e.g. one of sensor bridges 800a, 800b or 800c described above; an output offset generation circuit 954; and an ICF (Indirect Current Feedback) amplifier 955.

The microcontroller unit (MCU) 952 may comprise an analog-to-digital converter (ADC) 956 to convert the voltage related to the measured strain *ε* to a digital signal; a digital-to-analog converter (DAC) 957; and a CPU 958 for digital processing with data acquired through the ADC 956, and for control of the DAC 957.

The output offset generation circuit 954 generates a fixed voltage V_{off,amp} which is employed as an output voltage reference of the ICF amplifier 955 to accommodate the ADC input voltage to a dynamic voltage range of the ADC 956. The ICF amplifier 955 amplifies the differential output voltage *V*ₒ of the sensor bridge 953, and sets the output voltage for zero-load conditions (*ε*=0) according to the fixed voltage V_{off,amp} and the variable voltage *V*_{DAC}, thus being able to dynamically compensate non-desired effects in the sensing application. The voltage being inputted to the ADC can be computed as expressed in equation (4): ${V}_{in , ADC} \left(ϵ\right) = {V}_{off , amp} + {A}_{v} {V}_{o} \left(ϵ\right) + {A}_{v , DAC} \left({V}_{off , amp}-{V}_{DAC}\right)$ (4)

In equation (4), *Aᵥ* is the voltage gain, and depends on external resistor ratio as specified in equation (5), and *A_{v,DAC}* is the voltage gain on the compensation voltage and depends on external resistor ratio as specified in equation (6): ${A}_{v} = 1 + {R}_{2} / {R}_{1} + {R}_{2} / {R}_{A}$ (5) ${A}_{v , DAC} = 1 + {R}_{2} / {R}_{A}$ (6)

The digital-to-analog converter (DAC) 957 generates a voltage *V*_{DAC} for dynamic compensation of the sensing application. For this compensation, this voltage aims to set *V*_{in,ADC}(*ε*=0) = V_{off,amp}.

To achieve this, *V*_{DAC} is set according to equation (7): 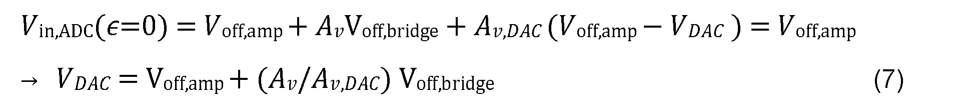 Vin,ADC(ε=0) = Voff,amp + AvVoff,bridge + Av,DAC (Voff,amp - VDAC ) = Voff,amp → VDAC = Voff,amp + (Av/Av,DAC) Voff,bridge (7)

In order to set *V*_{DAC}, a close-loop calibration process may be performed, prior to the regular operation of the measurement system 950, to obtain the value of V_{off,bridge}.

The process to obtain V_{off,bridge} and set *V*_{DAC} may be performed e.g. every time a fluid container is replaced, to take into account the variation that V_{off,bridge} may have in time, and therefore obtain more accurate estimates of the amount of fluid in the fluid container.

Although a number of particular implementations and examples have been disclosed herein, other variants and modifications of the disclosed devices and methods are possible. For example, not all the features disclosed herein are included in all the implementations, and implementations comprising other combinations of the features described are also possible.

## Claims

1. A support (20) for a fluid container (FC) for a printing apparatus, the support comprising:
- a bracket (100, 200) comprising a U-shaped cross section with a web (101, 201) and two wings (102, 103), with each of the wings extending from one of the ends of the web, and with both wings extending towards a same side of the web, wherein the bracket comprises:
- a mounting portion (104, 204) for attaching a first wing (102, 202) of the bracket to a printing apparatus (PA); and
- a bearing portion (105, 205) for attaching the fluid container to a second wing (103, 203) of the bracket; and the support being **characterized by** further comprising:
- a strain gauge (30) attached on the web of the U-shaped cross section of the bracket, between the mounting portion and the bearing portion, whereby the strain gauge is a sensing element that, under a load caused by a weight of the fluid container (FC), is configured to deform and change an electrical resistance of the strain gauge in proportion to a mechanical strain of the web of the bracket (100).

2. The support according to claim 1, the strain gauge being attached to the bracket on an outer surface (207) of the web of the U-shaped cross section.

3. The support according to claim 1, comprising two strain gauges attached to the web of the bracket, the two strain gauges being spaced apart from each other along the web of the bracket, and placed symmetrically with respect to the centre of the web.

4. The support according to claim 1, comprising four strain gauges, two strain gauges being attached to the outer surface of the web of the bracket, and two strain gauges being attached to the inner surface of the web of the bracket.

5. The support according to claim 1, the strain gauge being a foil strain gauge comprising a plurality of thin parallel tracks, and the foil strain gauge being oriented on the web of the bracket with the parallel tracks extending in a direction perpendicular to a width direction of the web.

6. The support according to claim 1, the bracket being formed by a bent metal sheet.

7. The support according to claim 1, the distance between the bearing portion and the web of the bracket being greater than the distance between the mounting portion and the web.

8. A fluid level sensor (50), comprising
- the support according to any of the above claims; and
- a controller (40) configured to correlate the strain of the web to a fluid level in the fluid container.

9. A method (500, 600, 700) for determining the amount of fluid in a fluid container in a printing apparatus comprising a fluid level sensor according to the preceding claim 8, the method comprising:
- measuring (510, 610, 720), with the strain gauge, a strain occurring at the web of the U-shaped bracket; and
- determining (520, 620, 730) the amount of fluid in the fluid container based on the strain measured with the strain gauge.

10. The method according to claim 9, comprising determining the amount of fluid in the fluid container based also on parameters related to at least one of the fluid container and the fluid in the fluid container.

11. The method according to claim 9, comprising monitoring (710) the amount of fluid in the fluid container during operation of the printing apparatus by obtaining (740) successive measurements with the strain gauge of the strain at the web of the U-shaped bracket, and determining corresponding amounts of fluid in the fluid container.

12. The method according to claim 11, comprising triggering (750) an action when an amount of fluid determined is above or below a predetermined threshold.

13. The method according to claim 9, wherein determining the amount of fluid in the fluid container comprises:
- connecting one or more strain gauges in a sensor bridge with a topology selected from a quarter-bridge topology (800a), a half-bridge topology (800b) and a full-bridge topology (800c);
- obtaining an output voltage of the sensor bridge; and
- determining the amount of fluid in the fluid container based on the output voltage of the sensor bridge.

14. The method according to claim 9, wherein determining the amount of fluid in the fluid container comprises:
- connecting one or more strain gauges in a sensor bridge with a topology selected from a quarter-bridge topology, a half-bridge topology and a full-bridge topology;
- obtaining (901) an output voltage of the sensor bridge;
- amplifying (902) the output voltage and applying (903) a correction to the amplified output voltage to compensate an offset voltage of the sensor bridge; and
- converting (904) the amplified and corrected voltage to a digital signal.

15. The method according to claim 14, comprising determining the offset voltage of the sensor bridge by performing a calibration when there is no container attached to the U-shaped bracket.

## Patentansprüche

1. Ein Träger (20) für einen Fluidbehälter (FC) für eine Druckvorrichtung, wobei der Träger umfasst:
- eine Halterung (100, 200), die einen U-förmigen Querschnitt mit einem Steg (101, 201) und zwei Schenkeln (102, 103) umfasst, wobei sich jeder der Schenkel von einem der Enden des Stegs erstreckt und wobei sich beide Schenkel zu einer selben Seite des Stegs erstrecken, wobei die Halterung umfasst:
- einen Montageabschnitt (104, 204) zum Befestigen eines ersten Schenkels (102, 202) der Halterung an einer Druckvorrichtung (PA); und
- einen Lagerabschnitt (105, 205) zum Befestigen des Fluidbehälters an einem zweiten Schenkel (103, 203) der Halterung; und
wobei der Träger **dadurch gekennzeichnet ist, dass** er ferner umfasst:
- einen Dehnungsmessstreifen (30), der an dem Steg des U-förmigen Querschnitts der Halterung zwischen dem Montageabschnitt und dem Lagerabschnitt befestigt ist, wobei der Dehnungsmessstreifen ein Sensorelement ist, das konfiguriert ist, sich unter einer durch ein Gewicht des Fluidbehälters (FC) verursachten Last zu verformen und einen elektrischen Widerstand des Dehnungsmessstreifens proportional zu einer mechanischen Dehnung des Stegs der Halterung (100) zu ändern.

2. Der Träger nach Anspruch 1, wobei der Dehnungsmessstreifen an der Halterung an einer Außenoberfläche (207) des Stegs des U-förmigen Querschnitts befestigt ist.

3. Der Träger nach Anspruch 1, der zwei Dehnungsmessstreifen umfasst, die an dem Steg der Halterung befestigt sind, wobei die zwei Dehnungsmessstreifen entlang des Stegs der Halterung voneinander beabstandet und symmetrisch in Bezug auf die Mitte des Stegs platziert sind.

4. Der Träger nach Anspruch 1, der vier Dehnungsmessstreifen umfasst, wobei zwei Dehnungsmessstreifen an der Außenoberfläche des Stegs der Halterung befestigt sind und zwei Dehnungsmessstreifen an der Innenoberfläche des Stegs der Halterung befestigt sind.

5. Der Träger nach Anspruch 1, wobei der Dehnungsmessstreifen ein Folien-Dehnungsmessstreifen ist, der eine Vielzahl von dünnen parallelen Bahnen umfasst, und der Folien-Dehnungsmessstreifen an dem Steg der Halterung ausgerichtet ist, wobei sich die parallelen Bahnen in einer Richtung senkrecht zu einer Breitenrichtung des Stegs erstrecken.

6. Der Träger nach Anspruch 1, wobei die Halterung durch einen gebogenen Metallbogen gebildet ist.

7. Der Träger nach Anspruch 1, wobei der Abstand zwischen dem Lagerabschnitt und dem Steg der Halterung größer ist als der Abstand zwischen dem Montageabschnitt und dem Steg.

8. Ein Fluidpegelsensor (50), der umfasst:
- den Träger nach einem der vorstehenden Ansprüche; und
- einen Controller (40), der konfiguriert ist, die Dehnung des Stegs mit einem Fluidpegel in dem Fluidbehälter zu korrelieren.

9. Ein Verfahren (500, 600, 700) zum Bestimmen der Fluidmenge in einem Fluidbehälter in einer Druckvorrichtung, die einen Fluidpegelsensor nach dem vorstehenden Anspruch 8 umfasst, wobei das Verfahren umfasst:
- Messen (510, 610, 720) einer an dem Steg der U-förmigen Halterung auftretenden Dehnung mit dem Dehnungsmessstreifen; und
- Bestimmen (520, 620, 730) der Fluidmenge in dem Fluidbehälter auf der Basis der mit dem Dehnungsmessstreifen gemessenen Dehnung.

10. Das Verfahren nach Anspruch 9, welches das Bestimmen der Fluidmenge in dem Fluidbehälter auch auf der Basis von Parametern umfasst, die sich auf mindestens eines von dem Fluidbehälter und dem Fluid in dem Fluidbehälter beziehen.

11. Das Verfahren nach Anspruch 9, welches das Überwachen (710) der Fluidmenge in dem Fluidbehälter während des Betriebs der Druckvorrichtung durch Erhalten (740) aufeinanderfolgender Messungen der Dehnung an dem Steg der U-förmigen Halterung mit dem Dehnungsmessstreifen und Bestimmen entsprechender Fluidmengen in dem Fluidbehälter umfasst.

12. Das Verfahren nach Anspruch 11, welches das Auslösen (750) einer Aktion, wenn eine bestimmte Fluidmenge über oder unter einem vorbestimmten Schwellenwert liegt, umfasst.

13. Das Verfahren nach Anspruch 9, wobei das Bestimmen der Fluidmenge in dem Fluidbehälter umfasst:
- Verbinden eines oder mehrerer Dehnungsmessstreifen in einer Sensorbrücke mit einer Topologie, ausgewählt aus einer Viertelbrückentopologie (800a), einer Halbbrückentopologie (800b) und einer Vollbrückentopologie (800c);
- Erhalten einer Ausgangsspannung der Sensorbrücke; und
- Bestimmen der Fluidmenge in dem Fluidbehälter auf der Basis der Ausgangsspannung der Sensorbrücke.

14. Das Verfahren nach Anspruch 9, wobei das Bestimmen der Fluidmenge in dem Fluidbehälter umfasst:
- Verbinden eines oder mehrerer Dehnungsmessstreifen in einer Sensorbrücke mit einer Topologie, ausgewählt aus einer Viertelbrückentopologie, einer Halbbrückentopologie und einer Vollbrückentopologie;
- Erhalten (901) einer Ausgangsspannung der Sensorbrücke;
- Verstärken (902) der Ausgangsspannung und Anwenden (903) einer Korrektur auf die verstärkte Ausgangsspannung, um eine Offsetspannung der Sensorbrücke auszugleichen; und
- Umwandeln (904) der verstärkten und korrigierten Spannung in ein digitales Signal.

15. Das Verfahren nach Anspruch 14, welches das Bestimmen der Offsetspannung der Sensorbrücke durch Ausführen einer Kalibrierung, wenn kein Behälter an der U-förmigen Halterung befestigt ist, umfasst.

## Revendications

1. Support (20) pour un récipient de fluide (FC) pour un appareil d'impression, le support comprenant :
- un étrier (100, 200) comprenant une section transversale en forme de U avec une âme (101, 201) et deux ailes (102, 103), chacune des ailes s'étendant depuis l'une des extrémités de l'âme, et les deux ailes s'étendant vers un même côté de l'âme, dans lequel l'étrier comprend :
- une partie de montage (104, 204) pour fixer une première aile (102, 202) de l'étrier à un appareil d'impression (PA) ; et
- une partie d'appui (105, 205) pour fixer le récipient de fluide à une seconde aile (103, 203) de l'étrier ; et
le support étant **caractérisé en ce qu'**il comprend en outre :
- une jauge de déformation (30) fixée sur l'âme de la section transversale en forme de U de l'étrier, entre la partie de montage et la partie d'appui, moyennant quoi la jauge de déformation est un élément de détection qui, sous une charge causée par un poids du récipient de fluide (FC), est conçu pour se déformer et modifier une résistance électrique de la jauge de déformation proportionnellement à une déformation mécanique de l'âme de l'étrier (100).

2. Support selon la revendication 1, la jauge de déformation étant fixée à l'étrier sur une surface externe (207) de l'âme de la section transversale en forme de U.

3. Support selon la revendication 1, comprenant deux jauges de déformation fixées à l'âme de l'étrier, les deux jauges de déformation étant espacées l'une de l'autre le long de l'âme de l'étrier, et placées symétriquement par rapport au centre de l'âme.

4. Support selon la revendication 1, comprenant quatre jauges de déformation, deux jauges de déformation étant fixées à la surface externe de l'âme de l'étrier, et deux jauges de déformation étant fixées à la surface interne de l'âme de l'étrier.

5. Support selon la revendication 1, la jauge de déformation étant une jauge de déformation à feuille comprenant une pluralité de pistes parallèles minces, et la jauge de déformation à feuille étant orientée sur l'âme de l'étrier avec les pistes parallèles s'étendant dans une direction perpendiculaire à une direction de largeur de l'âme.

6. Support selon la revendication 1, l'étrier étant formé par une feuille métallique pliée.

7. Support selon la revendication 1, la distance entre la partie d'appui et l'âme de l'étrier étant supérieure à la distance entre la partie de montage et l'âme.

8. Capteur de niveau de fluide (50), comprenant
- le support selon l'une quelconque des revendications ci-dessus ; et
- un dispositif de commande (40) configuré pour établir une corrélation entre la déformation de l'âme et un niveau de fluide dans le récipient de fluide.

9. Procédé (500, 600, 700) pour déterminer la quantité de fluide dans un récipient de fluide dans un appareil d'impression comprenant un capteur de niveau de fluide selon la revendication 8 précédente, le procédé comprenant :
- la mesure (510, 610, 720), avec la jauge de déformation, d'une déformation se produisant au niveau de l'âme de l'étrier en forme de U ; et
- la détermination (520, 620, 730) de la quantité de fluide dans le récipient de fluide sur la base de la déformation mesurée avec la jauge de déformation.

10. Procédé selon la revendication 9, comprenant la détermination de la quantité de fluide dans le récipient de fluide sur la base également de paramètres liés à au moins l'un parmi le récipient de fluide et le fluide dans le récipient de fluide.

11. Procédé selon la revendication 9, comprenant la surveillance (710) de la quantité de fluide dans le récipient de fluide pendant le fonctionnement de l'appareil d'impression par l'obtention (740) de mesures successives, avec la jauge de déformation, de la déformation au niveau de l'âme de l'étrier en forme de U, et la détermination de quantités de fluide correspondantes dans le récipient de fluide.

12. Procédé selon la revendication 11, comprenant le déclenchement (750) d'une action lorsqu'une quantité de fluide déterminée est supérieure ou inférieure à un seuil prédéterminé.

13. Procédé selon la revendication 9, dans lequel la détermination de la quantité de fluide dans le récipient de fluide comprend :
- la connexion d'une ou plusieurs jauges de déformation dans un pont de capteurs avec une topologie choisie parmi une topologie en quart de pont (800a), une topologie en demi-pont (800b) et une topologie en pont complet (800c) ;
- l'obtention d'une tension de sortie du pont de capteurs ; et
- la détermination de la quantité de fluide dans le récipient de fluide sur la base de la tension de sortie du pont de capteurs.

14. Procédé selon la revendication 9, dans lequel la détermination de la quantité de fluide dans le récipient de fluide comprend :
- la connexion d'une ou plusieurs jauges de déformation dans un pont de capteurs avec une topologie choisie parmi une topologie en quart de pont, une topologie en demi-pont et une topologie en pont complet ;
- l'obtention (901) d'une tension de sortie du pont de capteurs ;
- l'amplification (902) de la tension de sortie et l'application (903) d'une correction à la tension de sortie amplifiée pour compenser une tension de décalage du pont de capteurs ; et
- la conversion (904) de la tension amplifiée et corrigée en un signal numérique.

15. Procédé selon la revendication 14, comprenant la détermination de la tension de décalage du pont de capteurs en effectuant un étalonnage lorsqu'aucun récipient n'est fixé à l'étrier en forme de U.
